# EUROPEAN PATENT APPLICATION

(11) **EP 1 309 099 A1**
(43) Date of publication of application: **07.05.2003**
(21) Application number: 01402825.2
(22) Date of filing: 31.10.2001
(51) Int. Cl.: H04B 7/005

(54) **Telecommunication system with improved downlink quality feedback**

(71) Applicant: Mitsubishi Electric Information Technology Centre Europe B.V., 1119 NS Schiphol Rijk (NL)
(72) Inventor: Fukui, Noriyuki, Immeuble Germanium, 35700 Rennes (FR)
(74) Representative: Maillet, Alain

(57) **Abstract**

The invention relates to a telecommunication system, which includes a transceiver TR2 comprising means MSM for measuring a quality level of a transmission link DLNK each time a new frame Fi is received by said transceiver TR2.

According to the invention, the second transceiver TR2 further comprises
. means ANM for computing a quality difference between successive quality levels QF0, QF1 corresponding to successively received frames, and
. means (RF, ANT) for transmitting an uplink return signal RS, representative of the last measured quality level, which means (RF, ANT) are intended to be activated only when the quality difference exceeds a predetermined reference value REF.

The invention enables to provide an emitter with a feedback regarding the quality of a downlink channel, whithout causing a prohibitive increase in the computing load of said emitter or in the volume of the communication traffic in the coverage area of said emitter.

## Description

The present invention relates to a telecommunication system for transmitting signals between a first and a second transceiver, said signals consisting essentially of successive frames, the second transceiver including measuring means for measuring a quality level of a transmission link shared by the first and second transceivers, said measuring means being intended to be activated each time the second transceiver receives a frame from the first transceiver.

Such systems are currently used for implementing telecommunication standard specifications, such as UMTS. In known telecommunication systems, where the first transceiver may be, for example, a radio base station and the second transceiver a radiotelephone, quality measurements are used for adapting several parameters specific to signals sent by the first transceiver to the second transceiver, for example a modulation scheme or a coding rate applied to said signals. Such signals may be, for example, data packets sent by the first transceiver on a Physical Downlink Shared Channel (PDSCH), or control signals sent by the first transceiver on a Dedicated Physical Control CHannel (DPCCH) or on a Common PIlot Channel (CPICH). Such signals consist of successive frames, each frame lasting for example 10 ms. Generally speaking, if the quality level of the transmission is high, a high modulation and a high coding rate may be used, while low modulation and a low coding rate should be used if the quality level of the transmission is low. In order to ensure that the modulation scheme and the coding rate are suited to the operating conditions of the system, the first transceiver must be informed of the quality level of the transmission link it shares with the second transceiver. To this end, several solutions are known. In a solution commonly referred to as transmission power control, the first transceiver continuously monitors the power of signals received from the second transceiver, deduces from said power the quality level of the transmission link, and accordingly adjusts the modulation scheme and the coding rate. Such a solution involves considerable computing power on behalf of the first transceiver, particularly if it simultaneously communicates with multiple second transceivers, as will usually be the case in a cellular telecommunication system in which the first transceiver is a radio base station. In another known solution, the second transceiver measures a quality level and reports the measured value back to the first transceiver each time the second transceiver receives a new frame. While this solution enables to unburden the first transceiver by allocating the computing load required for measuring the quality level of the transmission link to the second transceiver, it raises another problem, since the frequent reporting performed by said second transceiver generates a raise in the communication traffic managed by the first transceiver, which raise will of course, be amplified if the first transceiver simultaneously communicates with multiple second transceivers, as will usually be the case in a cellular telecommunication system in which the first transceiver is a radio base station. This may generate interference between different ongoing communications, and eventually lead to a saturation of the radio base station, which will then be unable to handle all ongoing communications and may lead to communication and data loss.

The present invention aims at solving the above-mentioned problems, by providing a telecommunication system in which the modulation scheme and the coding rate of signals sent by the first transceiver to the second transceiver may be adapted to the operating conditions of the system, whithout causing a prohibitive increase in the computing load of the first transceiver or in the volume of the communication traffic handled by said first transceiver.

To this end, according to the invention, the second transceiver present in a telecommunication as described in the opening paragraph further includes :
. analysing means for computing a quality difference between two successive quality levels corresponding to two successively received frames, and
. transmission means for transmitting a return signal to the first transceiver, which return signal is representative of the last measured quality level, the transmission means being intended to be activated only when a value of said quality difference exceeds a predetermined reference value.

In such a telecommunication system, the first transceiver is not burdened by the computing load required for evaluating the quality level of the transmission link it shares with the second transceiver, since this quality level is measured by said second transceiver, while the reporting back of said quality level by the second transceiver doesn't cause significant increase in the volume of the communication traffic handled by the first transceiver, since such a reporting only occurs in cases where a significant change in the quality level of the transmission link is detected by the second transceiver, i.e. when the quality difference exceeds the reference value.

The quality difference may be computed between quality levels corresponding to two immediately successive, i.e. consecutive, frames, or between quality levels corresponding to frames wich are separated from each other by a predermined number of frames, which predetermined number can be stored once and for all in memory means included in the second transceiver, or be regularly updated by means of a specific signal sent by the first transceiver to the second transceiver.

The quality difference may preferrably be computed as a difference between the last measured quality level and the quality level of which the last return signal sent via the transmitting means was representative.

The return signal may carry to the first transceiver an explicit measured value of the quality level, or the value of the quality difference computed by the analysing means, which then carries implicitly the last measured value of the quality level.

The quality level measured by the second transceiver may be representative of a value of a signal to noise ratio, and then be specific to the nature of the transmission link shared by the first and second transceivers. The quality level may also be representative of a value of a carrier to interference ratio, which takes into account interferences likely to be caused by other transceivers which may be operating in the vincinity of the first and/or second transceivers.

The predetermined reference value can be stored once and for all in memory means included in the second transceiver, or be regularly updated by means of a specific signal sent by the first transceiver to the second transceiver.

The invention also relates to a communication device able to perform the functions of the second transceiver in a telecommunication system as described above.

In its principle, the invention also relates to a method of transmitting signals between a first and a second transceiver, said signals consisting essentially of successive frames, including a measuring step for measuring a quality level of a transmission link shared by the first and second transceivers, which method further includes the following steps :
. an analysing step for computing a quality difference between two successive quality levels corresponding to two successively received frames, and
. a transmission step for transmitting a return signal to the first transceiver, which return signal is representative of the last measured quality level, which transmission step is activated only when a value of said quality difference exceeds a predetermined reference value.

The quality difference may be computed between quality levels corresponding to two immediately successive, i.e. consecutive, frames, or between quality levels corresponding to frames wich are separated from each other by a predermined number of frames, which predetermined number can be stored once and for all in memory means included in the second transceiver, or be regularly updated by means of a specific signal sent by the first transceiver to the second transceiver.

In a preferred implementation of the method described above, the quality difference may be computed as a difference between the last measured quality level and the quality level of which the last return signal sent via the transmitting means was representative.

The return signal may carry an explicit measured value of the quality level, or the value of the quality difference computed during the analysing step, which then carries implicitly the last measured value of the quality level.

The quality level measured during the measuring step may be representative of a value of a signal to noise ratio, and then be specific to the nature of the transmission link shared by the first and second transceivers. The quality level may also be representative of a value of a carrier to interference ratio, which takes into account interferences likely to be caused by other transceivers which may be operating in the vincinity of the first and/or second transceivers.

The predetermined reference value can be set once and for all during an initializing step, or be regularly updated during an updating step by means of a specific signal sent by the first transceiver to the second transceiver.

The characteristics of the invention mentioned above, as well as others, will emerge more clearly from a reading of the following description given in relation to the accompanying figures, amongst which:
Fig.1 is a functionnal diagram which depicts a telecommunication system according to the invention,
Fig.2 is a block diagram which describes an embodiment of a transceiver included in such a telecommunication system,
Fig.3 is a flow chart which illustrates a method for transmitting data implemented in such a telecommunication system,
Fig.4 is a flow chart which illustrates a variant of such a method, and
Fig.5 is a chronogram which illustrates an exchange of signals occurring between the first and second transceivers in such a telecommunication system.

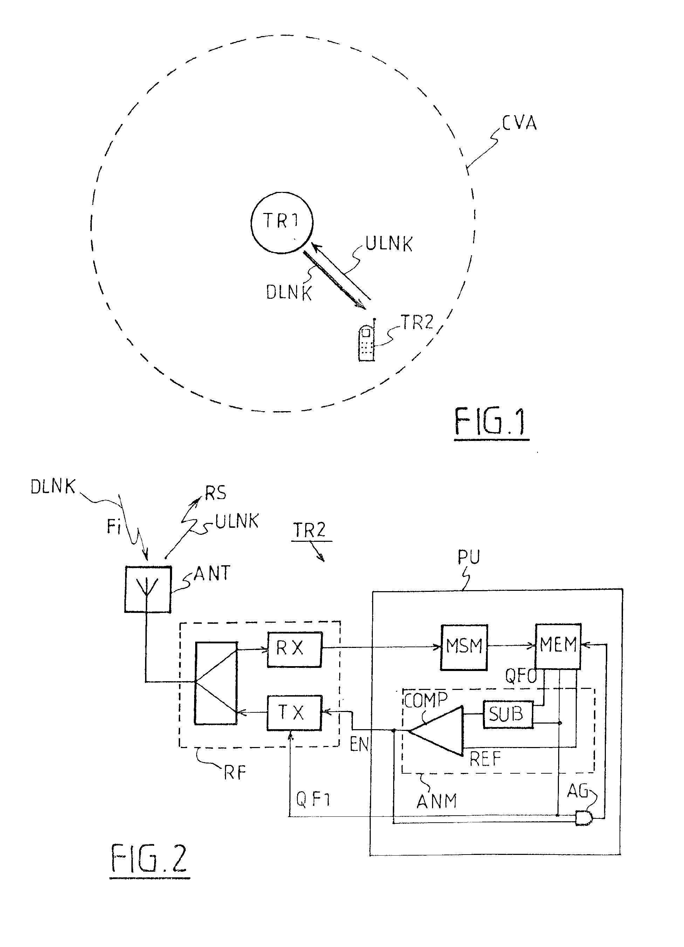

Fig. 1 diagrammatically shows a telecommunication system in accordance with an embodiment of the invention, which system includes a first and a second transceiver TR1 and TR2, for example a base station and a radiotelephone, respectively, in a UMTS telecommunication system. When the second transceiver TR2 is geographically located in a coverage area CVA attributed to the first transceiver TR1, a bidirectionnal communication link can be established between said transceivers TR1 and TR2. This link will usually feature a downlink DLNK, through which the first transceiver TR1 will send signals carrying, for example, data packets or control information, and essentially consisting of frames to the second transceiver TR2, and an uplink ULNK through which the second transceiver TR2 may also send signals to the first transceiver TR1. The signals sent via the downlink DLNK will advantageously be subjected to a modulation scheme and an encoding which is adapted to the quality level of the downlink transmission. If the quality level of the downlink DLNK is high, a high modulation and a high coding rate may be used, while low modulation and a low coding rate should be used if the quality level of the transmission is low. In order to ensure that the modulation scheme and the coding rate are suited to the operating conditions of the system, the first transceiver TR1 must be informed of the quality level of the downlink DLNK.

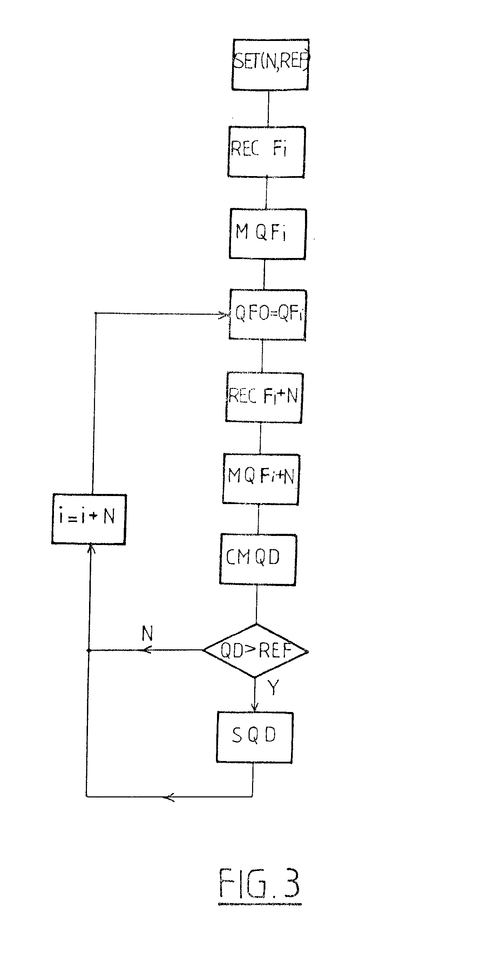

Fig.2 is a block diagram of a second transceiver TR2, which is provided with means for sending the above-described first transceiver a feedback on the quality of the downlink DLNK, said feedback being effectively sent via the uplink ULNK only when it may have a significant impact on the operating conditions of the telecommunication system. The second transceiver TR2 includes, integrated in this example within a processing unit PU :
. measuring means MSM for measuring a quality level of the downlink DLNK, said measuring means MSM being intended to be activated each time the second transceiver TR2 receives a frame F; through said downlink DLNK,
. analysing means ANM for computing a quality difference between two successive quality levels QF1, QF0, corresponding to two successively received frames.

The second transceiver TR2 further includes transmission means (ANT, RF) for transmitting a return signal RS via the uplink ULNK, which return signal RS is representative of the last measured quality level QF1, the transmission means being intended to be activated only when a value of said quality difference exceeds a predetermined reference value REF.

In this embodiment of the invention, the transmission means (RF, ANT) enable the second transceiver TR2 to receive and send data from and to a first transceiver, respectively, via the downlink DLNK and the uplink ULNK. Incoming frames Fᵢ are forwarded from the antenna ANT to measuring means MSM, via a receiving tuner RX included in the radio part RF. The measuring means MSM measure, for each incoming frame F;, a quality level QF1 of the downlink DLNK through which this frame Fᵢ has been received. The resulting quality level QF1 is stored in memory means MEM, in which a quality level QF0 corresponding to a previous frame is already stored. The quality levels QF0 and QF1 are thus successive quality levels corresponding to two successively received frames.

A quality difference may be computed between quality levels QF0 and QF1 corresponding to two immediately successive, i.e. consecutive, frames, or between quality levels QF0 and QF1 corresponding to frames wich are separated from each other by a predermined number of frames, which predetermined number can be stored once and for all in the memory means MEM, or be regularly updated by means of a specific signal sent via the downlink DLNK to the second transceiver TR2.

The quality difference may preferrably be computed as a difference between the last measured quality level QF1 and a quality level QF0 of which the last return signal RS sent via the transmitting means (ANT, RF) and the uplink ULNK was representative.

In this embodiment of the invention, the analysing means ANM include a substractor SUB for computing said difference between said successive quality levels QF0 and QF1. The analysing means ANM further include a comparator COMP for comparing the value of the difference computed by substractor SUB with a predermined reference value REF, which may have been stored once and for all in the memory means MEM, or be regularly updated by means of a specific signal received by the second transceiver TR2 via the downlink DLNK.

The last measured quality level QF1 is fed to an input of a transmitting tuner TX, which is included in the radio part RF of the transmitting means. Said transmitting tuner TX also features an enabling input, intended to receive an enabling signal EN. The transmitting tuner TX is deactivated if said enabling signal EN is in a so-called inactive state, for example at logic level "0", and activated if the enabling signal EN is in a so-called active state, for example at logic level "1".

If an absolute value of the quality difference QF1-QF0 or QF0-QF1 exceeds the predermined value REF, the enabling signal EN, which is delivered by an output of comparator COMP is set in its active state, i.e. at logic level "1", which enables the RF part to send through the uplink ULNK a return signal RS representative of the last measured quality level QF1 via the antenna ANT. If said absolute value of the quality difference QF1-QF0 or QF0-QF1 is lower than the predermined value REF, the enabling signal EN will stay in its inactive state, and no return signal will be transmitted.

In this embodiment of the invention, the second transceiver TR2 further includes an AND gate AG, which enables to refresh the value of the quality level of which the last transmitted return signal RS was representative, which value is stored in the memory means MEM, and may be used as quality level value QF0 according to a preferred embodiment of the invention.

Fig.3 is a flowchart describing a method of transmitting data according to an embodiment of the invention. During an initializing step SET(N,REF), a predetermined number N and a predetermined reference value REF are sent to a second transceiver as described above. In a next step RECFi, said transceiver receives a frame Fᵢ. In a next step MQFi, a quality level QFᵢ corresponding to this received frame Fᵢ, for example a carrier to interference ratio, is measured. The resulting measured value is stored as QF0 in a following step QF0=QFᵢ. In a further step RECF_{i+N}, an Nth frame F_{i+N} following frame Fᵢ is received by the second transceiver. In a next step MQF_{i+N}, the quality level QF_{i+N} corresponding to this received frame F_{i+N} is measured. In a next step CMQD, a difference QD is computed between the previously stored quality level value QF0 and the last measured quality level QF_{i+N}.

If the value of said quality difference QD is lower than the predetermined reference value REF, the computed quality difference QD is considered to be irrelevant and no return signal is sent via the uplink by the second transceiver. In a next step, i is replaced by i+N and the previous value of QF0 is replaced by the value of the quality level QF_{i+N} which has been measured for frame F_{i+N}, so that a new cycle may begin.

If the value of said quality difference QD exceeds the predetermined reference value REF, the computed quality difference QD is considered to be significant and a return signal representative of the value of the previously computed quality difference QD is sent via the uplink by the second transceiver during a transmitting step SQD, so that the first transceiver may adapt its modulation scheme and coding rate to the changes in transmission quality. In a next step, i is replaced by i+N and the previous value of QF0 is replaced by the value of the quality level QF_{i+N} which has been measured for frame F_{i+N}, so that a new cycle may begin.

In the method according to the invention described above, a quality difference QD is computed between quality levels QF0 and QF1 corresponding to frames wich are separated from each other by a predermined number N of frames, which predetermined number N can be stored once and for all, or be regularly updated by means of a specific signal sent via the downlink to the second transceiver. The quality difference QD may also be computed between quality levels QF0 and QFᵢ corresponding to two immediately successive, i.e. consecutive, frames, which is the case if N=1.

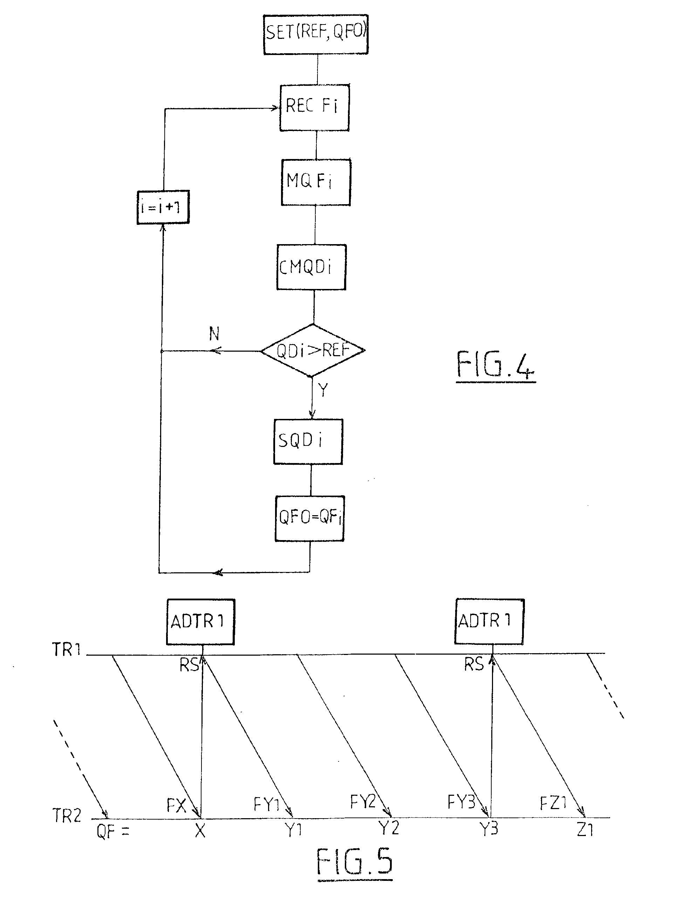

Fig.4 is a flowchart which describes a method of transmitting data according to another embodiment of the invention, in which the quality difference QD is computed as a difference between the last measured quality level QFᵢ and a quality level QF0 of which the return signal sent during the last transmitting step was representative. Such a method includes an initializing step SET(REF, QF0), during which a predetermined reference value REF and an initial quality level value QF0 are sent to a second transceiver as described above. In a next step RECFi, said transceiver receives a frame Fᵢ. In a next step MQFi, a quality level QFᵢ corresponding to this received frame Fᵢ, for example a carrier to interference ratio, is measured. In a next step CMQDi, a difference QDi is computed between the previously stored quality level value QF0 and the last measured quality level QFᵢ.

If the value of said quality difference QDi is lower than the predetermined reference value REF, the computed quality difference QDi is considered to be irrelevant and no return signal is sent via the uplink by the second transceiver. In a next step, i is replaced by i+1, so that a new cycle may begin.

If the value of said quality difference QDi exceeds the predetermined reference value REF, the computed quality difference QDi is considered to be significant and a return signal representative of the value of the previously computed quality difference QDi is sent via the uplink by the second transceiver during a transmitting step SQDi, so that the first transceiver may adapt its modulation scheme and coding rate to the changes in transmission quality. In a next step, the initial quality value QF0 is replaced by the quality level QFi of which the previously sent return signal was representative, and i is replaced by i+1, so that a new cycle may begin.

Fig.5 is a chronogram which describes signals exchanged between the first and second transceivers in a telecommunication system in which the above-described method is implemented.

A frame FX is sent by first transceiver TR1 to second transceiver TR2 via a downlink channel having a quality level X, which is sufficiently different from a former downlink quality level for second transceiver TR2 to report this quality difference by means of a return signal RS.

First transceiver TR1 then adapts its modulation scheme and coding rate during an adjusting step ADTR1, and sends a new frame FY1 to second transceiver TR2. The measured quality level Y1 corresponding to this frame FY1 is such that a quality difference Y1-X or X-Y1 between Y1 and the quality level X of which the previously sent return signal RS was representative stays lower than a predermined reference value. No significant change in the downlink quality level being identified, no new return signal is sent through the uplink.

First transceiver TR1 then sends a new frame FY2 to second transceiver TR2. The measured quality level Y2 corresponding to this frame FY2 is such that a quality difference Y2-X or X-Y2 between Y2 and the quality level X of which the previously sent return signal RS was representative stays lower than the predermined reference value. No significant change in the downlink quality level being identified, no new return signal is sent through the uplink.

First transceiver TR1 then sends a new frame FY3 to second transceiver TR2. Because, for example, of recent movements, and/or of changes in the environment of transceiver TR2, the measured quality level Y3 corresponding to this frame FY3 is now such that a quality difference Y3-X or X-Y3 between Y3 and the quality level X of which the previously sent return signal RS was representative exceeds the predermined reference value. A significant change in the downlink quality level having been identified, a new return signal RS is sent through the uplink to first transceiver TR1, which adapts its modulation scheme and coding rate during a new adjusting step ADTR1, and sends a new frame FZ1 to second transceiver TR2. The quality level corresponding to this new frame FZ1 will then be compared with the quality level Y3 of which the previously sent return signal RS was representative.

It clearly appears that the invention allows to give to the first transceiver TR1 a feedback regarding the quality of its downlink transmissions towards the second transceiver TR2, without burdening said first transceiver TR1 with the computing load required for evaluating this quality level, which is measured by the second transceiver TR2, while the reporting back of said quality level by second transceiver TR2 doesn't cause a significant increase in the volume of the communication traffic handled by the first transceiver TR1, since such a reporting only occurs in cases where a significant change in the quality level of the downlink transmission channel is detected by the second transceiver TR2.

## Claims

1. A telecommunication system for transmitting signals between a first and a second transceiver, said signals consisting essentially of successive frames, the second transceiver including measuring means for measuring a quality level of a transmission link shared by the first and second transceivers, said measuring means being intended to be activated each time the second transceiver receives a frame from the first transceiver, telecommunication system wherein the second transceiver further includes :
. analysing means for computing a quality difference between two successive quality levels corresponding to two successively received frames, and
. transmission means for transmitting a return signal to the first transceiver, which return signal is representative of the last measured quality level, the transmission means being intended to be activated only when a value of said quality difference exceeds a predetermined reference value.

2. A telecommunication system as claimed in claim 1, in which the analysing means are intended to compute a quality difference between the last measured quality level and the quality level of which the last return signal sent via the transmitting means was representative.

3. A telecommunication system as claimed in claims 1 or 2, in which the return signal is representative of the quality difference computed by the analysing means.

4. A telecommunication system as claimed in any one of claims 1 to 3, in which the quality level is representative of a value of a carrier to interference ratio.

5. A telecommunication system as claimed in one of claims 1 to 4, in which the first transceiver is a radio base station and the second transceiver is a radiotelephone.

6. A communication device able to perform the functions of the second transceiver in a telecommunication system as claimed in any one of claims 1 to 4.

7. A method of transmitting signals between a first and a second transceiver, said signals consisting essentially of successive frames, including a measuring step for measuring a quality level of a transmission link shared by the first and second transceivers, which method further includes the following steps :
. an analysing step for computing a quality difference between two successive quality levels corresponding to two successively received frames, and
. a transmission step for transmitting a return signal to the first transceiver, which return signal is representative of the last measured quality level, which transmission step is activated only when a value of said quality difference exceeds a predetermined reference value.

8. A method as claimed in claim 7, in which the quality difference is computed between the last measured quality level and the quality level of which the return signal transmitted during the last transmission step was representative.

9. A method as claimed in claims 7 or 8, in which the return signal is representative of the quality difference computed during the analysing step.

10. A method as claimed in any one of claims 7 to 9, in which the quality level is representative of a value of a carrier to interference ratio.
